# EUROPÄISCHE PATENTSCHRIFT

(11) **EP 0 988 178 B1**
(45) Veröffentlichungstag und Bekanntmachung des Hinweises auf die Patenterteilung: **29.08.2001**
(21) Anmeldenummer: 98930725.1
(22) Anmeldetag: 25.05.1998
(51) Int. Cl.: B60Q 3/02

(54) **SCHALTUNGSANORDNUNG FÜR EINE FAHRZEUGINNENBELEUCHTUNG**
INSIDE LIGHTING CIRCUIT FOR A VEHICLE
CIRCUIT POUR L'ECLAIRAGE INTERIEUR D'UN VEHICULE

(30) Priorität: 17.06.1997 DE 19725397; 24.10.1997 DE 19746922; 25.10.1997 DE 19747202
(43) Veröffentlichungstag der Anmeldung: 29.03.2000
(73) Patentinhaber: Böhringer Kunstofftechnik GmbH, 74252 Massenbachhausen (DE)
(72) Erfinder: Schmidt, Detlev, 73614 Schorndorf (DE)
(74) Vertreter: Hössle, Markus, Dipl.-Phys.
(86) Internationale Anmeldenummer: EP9803066
(87) Internationale Veröffentlichungsnummer: WO9842172

(56) Entgegenhaltungen:
- WO-A-84/03670
- GB-A- 2 264 379
- US-A- 4 346 427

## Beschreibung

Die Erfindung betrifft eine Schaltungsanordnung für eine Innenbeleuchtung von Fahrgast-, Koffer bzw. Frachtraum und Handschuhfach von Kraftfahrzeugen.

In den Anfängen des Kraftfahrzeugbaus war Stand der Technik, daß die Fahrzeuginnenbeleuchtung manuell durch einen Handschalter betätigt werden mußte. Da dies auf die Dauer zu beschwerlich war, insbesondere im Dunkeln der Handschalter schwer zu finden war, wurde die Aufgabe gestellt, für das Be- und Entsteigen aus dem Fahrzeug automatisch das Innenlicht einzuschalten , welches nach abgeschlossenem Be-oder Entsteigen das Licht automatisch wieder ausschaltet. Gelöst wurde die Aufgabe durch einen Bewegungsmelder, bestehend aus Tür und Türkontakt als Sensor, der unvermeidliche Bewegungen der ein- oder aussteigenden Personen, nämlich das Betätigen der Tür, in ein elektrisches Signal wandelt, welches das Fahrzeuginnenlicht ein- bzw. ausschaltet.

Heute verbreiteter Stand der Technik ist ein Wahlschalter im Fahrgastinnenraum mit drei Stellungen, Türkontakte, die beim Öffnen der Türen sowie der Kofferraum und Handschuhfachklappe schließen, ein Zeitglied zum zeitververzögerten Ausschalten der Innenbeleuchtung, das beim Schließen der Türen getriggert wird. Ein Retriggern dieses Zeitgliedes ist durch erneutes Öffnen und Schließen der Türen möglich. Weiter liefert die Zündung ein Signal über ihren Zustand, so daß nach Schliessen der Türen und Starten der Zündung die zeitbegrenzt brennende Innenbeleuchtung gelöscht wird. Nachteile des bis hierher beschriebenen Standes der Technik sind, daß bei Wahlschalterstellung "Licht immer aus" das Licht auch dann ausbleibt, wenn der Fahrer im Dunkeln das Fahrzeug von außen öffnet. Er sieht weder Zündschloß noch den Wahlschalter und muß mühsam im Dunkeln herumtasten, bis er den Lichtschalter gefunden hat. Weiterer Nachteil ist, daß die Kontakte in den Türen zusammen mit den dafür benötigten Leitungen und Steckkern sehr kostspielig sind. daß bei versehentlich auf Wahlschalterstellung "immer Ein" belassenem Wahlschalter spätestens nach einem Tag die Batterie entleert ist und das Fahrzeug liegen bleibt, daß bei der häufigen Wahlschalterstellung "Einschalten Licht durch Türkontakte" und versehentlich offen gelassener Tür die Batterie ebenfalls nach spätestens einem Tag entleert ist, ebenso bei einem versehentlich nicht richtig geschlossenem Kofferraum oder Handschuhfach. In DE 38 20 829 C2, EP 0622 271 A2, EP 0 138 919 sowie DE 44 07 616 A1 werden verschiedene Lösungen angeführt, wobei jedoch keine umfassende und einfache Lösung aufgezeigt wird. DE 295 18 923 U1 beschränkt sich ausdrücklich auf die Beleuchtung des Motorraumes zur Abwehr von Mardern. Weiter ist bekannter Stand der Technik, daß Sensoren bei Betätigung des Türschlosses, der Fernbedienung sowie der Zentralverriegelung ein elektrisches Signal erzeugen, das dem Schaltkreis der Fahrzeuginnenbeleuchtung zugeführt wird, und damit das Fahrzeuginnenlicht aus bzw. einschaltet.

EP 0342345 A2 sieht ein Problem bei einer Art von Sensor für die Fahrzeuginnenbeleuchtung, welcher wie oben bereits beschrieben, als Bewegungsmelder mittels Tür als Aktuator und Türkontakt als Endlagentaster aufgebaut ist. Das Problem stellen die Kosten für die Türkontakte mitsamt Montage dar. Aufgabe ist es, die Türkontakte mitsamt Montage entfallen zu lassen. EP 0342345 A2 schlägt drei voneinander funktional unabhängige Lösungen vor, die einander nicht bedürfen. Als erstes sollen Luftdruckschwankungen beim Öffnen bzw. Schließen der Tür durch einen Signalgeber erkannt werden, als zweite Lösung soll ein von einem im Fahrzeuginnneren befindlichen Sender erzeugtes Wechselfeld (z. Bsp. Mikrowellenfeld, Ultraschallfeld...) beim Öffnen der Tür und oder dem Aus- und einsteigenden Personen verstimmt werden, diese Verstimmung mittels Empfänger und Schaltung in ein elektrische Schaltsignal umgesetzt werden. Als dritte unabhängige Lösung wird ein UV-Sender mit UV-Detektor vorgeschlagen, wobei die Störung des erzeugten UV-Feldes beim Öffnen der Tür von Sensor und Schaltung in ein Schaltsignal für die Fahrzeuginnenbeleuchtung umgesetzt wird. Der bisher bekannte Stand der Technik kann nicht befriedigen, insbesondere die letztgenannten drei Lösungsversuche. Ein Bewegungsmelder, der die durch die Bewegung der Tür ausgelösten Luftdruckschwankungen in ein elektrische Signal umsetzt, liefert in der Praxis zu oft ein fehlerhaftes Signal. Der vorgeschlagene Bewegungsmelder, der auf Verstimmung eines Wechselfeldes reagiert, ist in Form des UV-Bewegungsmelders nur bedingt brauchbar.

UV-Strahlung kann zur Erblindung führen, ein Pappkarton auf dem Beifahrersitz führt ebenso zu einer Verstimmung des UV bzw. US-Feldes genau wie das Öffnen einer Tür und somit zum dauerhaften Einschalten der Fahrzeuginnenbeleuchtung. Mikrowellen werden von der Metallkarosserie ständig hin- und herreflektiert, dringen nach außen und können z. Bsp. durch vorbeifahrende Lastwagen zurückreflektiert werden und die Innenbeleuchtung einschalten. In JPO 08156683 wird ein passiver Infrarotbewegungsmelder beschrieben, der Bewegungen von Personen außerhalb des geschlossenen Fahrzeuges in der Nähe des Türschlosses detekiert und eine, z. Bsp im Türschloß integrierte, Türschloßbeleuchtung einschaltet. Da nur Personen in der Nähe des Türschlosses außen am Fahrzeug erfaßt werden, werden Personen im geschlossenen Fahrzeuginneren nicht erfaßt. Zudem wird nur das Türschloß außen beleuchtet, eine Beleuchtung des Fahrzeuginnenraumes findet nicht statt.

Der Erfindung liegt die Aufgabe zugrunde, möglicht umfassend den unbefriedigenden Stand der Technik zu verbessern, und dieses auf möglichst einfache Art und Weise.

Da der Stand der Technik infolge der vielen Veröffentlichungen bereits unübersehbar viele Lösungen hat, hat er mindestens auch so viele Mängel, die Aufgabenstellung, die alle Mängel einbezieht, ist also ebenso umfangreich. Zur Vereinfachung wird die Aufgabe deshalb hier zusätzlich neu gefaßt: Bei anwesendem, agierendem Fahrzeugnutzer wird/bleibt die Fahrzeuginnenbeleuchtung automatisch eingeschaltet, bei nicht mehr anwesendem, nicht mehr agierendem Fahrzeugnutzer wird/bleibt das Licht automatisch (wieder) ausgeschaltet.

Die Erfindung löst die Aufgabe durch die kennzeichnenden Merkmale des Anspruches 1. Eine vorteilhafte Erweiterung stellt die Schaltungsanordnung nach Anspruch 2 dar. Weitere vorteilhafte Ausgestaltungen ergeben sich aus den Ansprüchen 3 bis 24.

Die Erfindung zeichnet sich dadurch aus, daß die Anwesenheit des Fahrzeugnutzer im Fahrzeuginnenraum direkt durch einen oder mehrere Infrarotbewegungsmelder erfaßt wird, wobei das bisher bekannte Zeitglied zum zeitverzögerten Ausschalten der Fahrzeuginnenbeleuchtung durch diese(n) Bewegungsmelder getriggert bzw. retriggert wird. So kann das Aus- und Einsteigen der Person erfaßt werden, ebenso wenn die Person sich anschnallt, etwas sucht etc. Vorteilhaft ist es, wenn der Infrarotbewegungsmelder bei geschlossenem Fahrzeug ausschließlich die Bewegungen von Personen, die sich im Inneren des Fahrzeuges befinden, erkennt. Dies kann durch geeignete Auswahl des Erfassungssektors des Bewegungsmelders geschehen. Bei getönten Scheiben kann der Erfassungssektor des Bewegungsmelders beliebig groß sein, da nur Bruchteile der IR-Strahlung von außen durch eine getönte Glasscheibe dringen können. Bei geöffneter Tür vergrößert sich der Erfassungssektors des IR-Sensors automatisch. Dadurch können auch Personen im Öffnungswinkel der Tür erkannt werden und das Fahrzeuginnenlicht eingeschaltet werden.

Es sind viele Ausführungsarten im Rahmen der Erfindung denkbar. So hebt es den Komfort, den Tasterschalter als Berührungsschalter auszuführen. Weiter ist es denkbar, den Infrarotbewegungssensor, die erfindungsmäßige Schaltung und das Zeitglied, den Tasterschalter sowie die Leuchte zusammen in einem Modul räumlich zusammenzufassen, das sich im Dachbereich befinden kann. Weiter ist die Zusammenfassung von IR-Bewegungsmelder oder Teilen davon, Zeitglied und erfindungsmäßiger Schaltung in einem integrierten Schaltkreis denkbar z. Bsp einem ASIC. Weiter kann für den Fall, daß z. Bsp. Personen im Fahrzeug übemachten wollen und durch die Fahrzeuginnenbeleuchtung auf keinen Fall gestört werden wollen, eine für Infrarotlicht undurchlässige Abdeckung vorgesehen werden, die zur Deaktivierung des Sensors über den Sensor geschoben wird.

Es kann wünschenswert sein, daß das Fahrzeuginnnenlicht bereits vor dem Ansprechen des passiven Infrarotbewegungsmelder eingeschaltet wird. Dazu wird das Zeitglied zum verzögerten Abschalten der Fahrzeuginnenbeleuchtung auch bei Wechsel der Zentralverriegelung vom Zustand "Geschlossen " auf "Geöffnet" getriggert. Weiter kann die Erfindung unter Verwendung von Logikbausteine wie PALs, GALs, PLDs und/oder eines Microcomputers softwaremäßig realisiert werden. Für den Fall, daß der Infrarotsensor mit der beschriebenen Blende deaktiviert worden ist, oder bei extremen Klimaverhältnissen, bei denen die Fahrzeuginnentemperatur selbst noch bei Nacht in der Nähe der Körpertemperatur des Menschen ist und daher der Infrarotbewegungsmelder nicht anspricht, ist es wünschenswert, dennoch eine Möglichkeit zur Beleuchtung des Fahrzeuginnenraumes zu haben. Möglich ist dies dadurch, daß das Zeitglied zum zeitverzögerten Ausschalten der Fahrzeuginnenbeleuchtung auch noch über den bereits beschriebenen manuellen Taster getriggert werden kann. Die Logikschaltung sieht dabei vor, daß bei abgelaufenem Zeitglied und anstehendem Triggersignal des manuellen Tasters das bereits beschriebene Halteglied, das für die Speicherung der Tasteneingabe vorgesehen ist, weiterhin für die Eingabe durch den Taster gesperrt bleibt und lediglich das Zeitglied getriggert wird. Erst nach Abfall des Tastersignals wird das Halteglied durch das nun getriggerte Zeitglied zur Eingabe freigegeben. Der Fahrzeugnutzer kann also bei deaktiviertem Infrarotbewegungsmelder durch Betätigen des Handtasters für die vorgegebene Zeit des Zeitgliedes den Fahrzeuginnenraum beleuchten. Die vorgegebene Zeit des Zeitgliedes beträgt dabei vorzugsweise 25 Sekunden. Ein früheres Ausschalten des Lichtes vor Ablauf des Zeitgliedes ist durch Betätigen des Handlasters möglich, da jetzt das Halteglied für den Tasterschalter durch das Zeitglied zur Eingabe freigegeben worden ist.

Weiter erhöht es den Komfort, wenn der Bereich der Türschweller durch im unteren Bereich der Türflügel angebrachte Lampen ausgeleuchtet wird. Weiter erhöht es den Komfort, wenn das Ein- und/ oder Ausschalten der Fahrzeuginnenbeleuchtung gedimmt ist, das heißt, das Ein- und Ausschalten der Beleuchtung erfolgt nicht schlagartig, sondern das Licht wird sanft aufgeblendet bzw. abgeblendet.

Weiter ist es möglich, daß das Einschalten der Fahrzeuginnenbeleuchtung nur dann erfolgt, wenn ein vorgesehener Helligkeitssensor erkennt, daß die Helligkeit ein definiertes Maß unterschreitet. Sollen mehrere Infrarotbewegungsmelder in einem Fahrzeuginnenraum gemäß der Erfindung verwendet werden, ist es aufgrund der geringeren Teileanzahl und der höheren Produktionsstückzahlen vorteilhaft, jeweils baugleiche Schaltungsanordnungen zu verwenden, die durch z. Bsp. Master-Slave Schaltung oder externe Beschaltung in einen Gesamtschaltkreis zusammengefügt werden können. Als Beispiel kann bei Verwendung zweier IR-Bewegungsmelder auf zwei identischen ASICs jeweils die Auswerteschaltung des passiven IR-Bewegungsmelders, die Logikschaltung, das Halteglied, die Dimmersteuerung etc. liegen. Das erste ASIC kann als Master dienen, das zweite als SLAVE. Beim ersten ASIC z. Bsp. kann das Halteglied an einen Tasterschalter angeschlossen sein, beim zweiten ASIC kann dieses Halteglied z. Bsp. durch Legen auf GROUND deaktiviert sein. Bei Verwendung nur eines PIR-Bewegungsmelder ist es ebenso vorteilhaft, daß einzelne Funktionen durch externe Beschaltung desaktiviert werden können, je nach Modellpolitik des Fahrzeugherstellers. Es sind beliebig viele Möglichkeiten nach den Gesetzen der logischen Verknüpfung möglich. Durch solche standarisierte Bauteile sind höhere Stückzahlen identischer elektronischer Baugruppen und/oder integrierter Schaltkreise zu entsprechend niedrigeren Stückkosten realisierbar. Weiter wird durch die erfindungsmäßige Schaltung ein Entleeren der Batterie sicher verhindert, die Batterie muß nicht mehr durch einen eigenen Stromkreis für die Handschuhfachbeleuchtung "geschont" werden. Daher kann man die Handschuhfachbeleuchtung parallel zur Fahrgastzellenbeleuchtung schalten. Ein separater Schalter für die Handschuhfachbeleuchtung wird dann nicht mehr benötigt. Weiter ist es vorteilhaft, um die Zahl der Infrarotbewegungsmelder gering zu halten, optische Lichtleitsysteme einzusetzen, die IR-Licht aus Bereichen im Fahrzeug, die ein PIR-Melder von seinem definierten Ort im Fahrzeug nicht direkt einsehen kann, so zu sammeln und/oder umzulenken und /oder umzuleiten,daß das IR-Licht nun in den IR-Sensor fallen kann. Dabei können alle bekankannten Mittel der Optik angewendet werden, wie Linsen, Spiegel, facettierte Spiegel, Fresnellinsen, Lichtleitkabel etc. aus allen für die Optik bekannten Materialien sowie die physikalischen Gesetze der Reflexion, Brechung, Beugung und Polarisation.

An einem Beipiel wird diese Ausführung der Erfindung beschrieben: Am Dachhimmel zwischen den Vordersitzen ist ein Modul mit PIR-Bewegungsmelder, Tasterschalter, Leuchte, erfindungsmäßiger Logikschaltung etc. angebracht. Im Modul ist ein optisches System vorgesehen, das IR-Licht aus allen Bereichen sammelt, die vom Modul geradlinig erreichbar sind. Weiter befinden sich am Dachhimmel in den Gehäusen für die Leselampen für die Rückbank facettierte Umlenkspiegel, ähnlich einem Shedd-Dach, die IR-Licht vom Bereich der Rückbank so umlenken, ggfs. dabei sammeln, daß das Licht vom IR-Sensor im Modul erfaßt werden kann. Bei PKW-Kombis ist am Himmel über der Ladefläche ebensolch ein Umlenkelement vorgesehen, ggFs. mit Lichtsammelfunktion, das das IR-Licht aus dem Kofferraum so umlenkt, daß es in den IR-Sensor treffen kann. Bei Limousinenausführungen wird ebenfalls das IR-Licht im Kofferraum erfaßt und/ oder gesammelt und über ein Lichtleitkabel in den Fahrgastinnenraum gebracht. Das IR-Licht tritt an einer Stelle im Fahrgastraum so aus,daß es vom IR-Sensor erfaßt werden kann. Eine starke Segmentierung der Erfassungssektoren ist vorteilhaft bei jeder Art von Lichtumleitung, um ein ausreichendes Empfangssignal dem PIR-Bewegungsmelder zur Verfügung zu stellen. Weiter ist es sinnvoll, den nicht mehr notwendigen Kofferraumkontakt entfallen zu lassen und die Kofferraumbeleuchtung parallel zur übrigen Fahrzeuginnenbeleuchtung zu schalten. Bei Cabriolets ist es vorteilhaft, wenn der IR-Bewegungsmelder bei geöffnetem Dach ganz deaktiviert ist oder einen verkleinerten Erfassungssektor hat, so daß keine Personen außerhalb des Fahrzeuges erfaßt werden. Weiter ist es für den Einsatz in gewissen Klimazonen vorteilhaft, wenn der IR-Sensor durch ein Peltier-Element gekühlt werden kann. Vorzugsweise wird das Peltier-Element dann eingeschaltet, wenn ein vorgesehenes Temperaturerfassungssystem eine Temperatur des IR-Sensors oberhalb einer definierten Temperatur detektiert und der bereits beschriebene Helligkeitssensor keine ausreichende Helligkeit im Fahrzeug feststellt. Vorteilhaft ist es dabei, wenn das Peltier-Element auch als Temperatursensor verwendet wird bei einem alternierenden Kühl, Meß- und ggFs. Pausenzyklus. Weiter sinnvoll ist es aus Zwecken der Energieersparnis, daß bei der beschriebenen Erfindung die Bauteile mit großem Verbrauch erst nach Detektion eines Fahrzeugnutzers mit Strom versorgt werden.

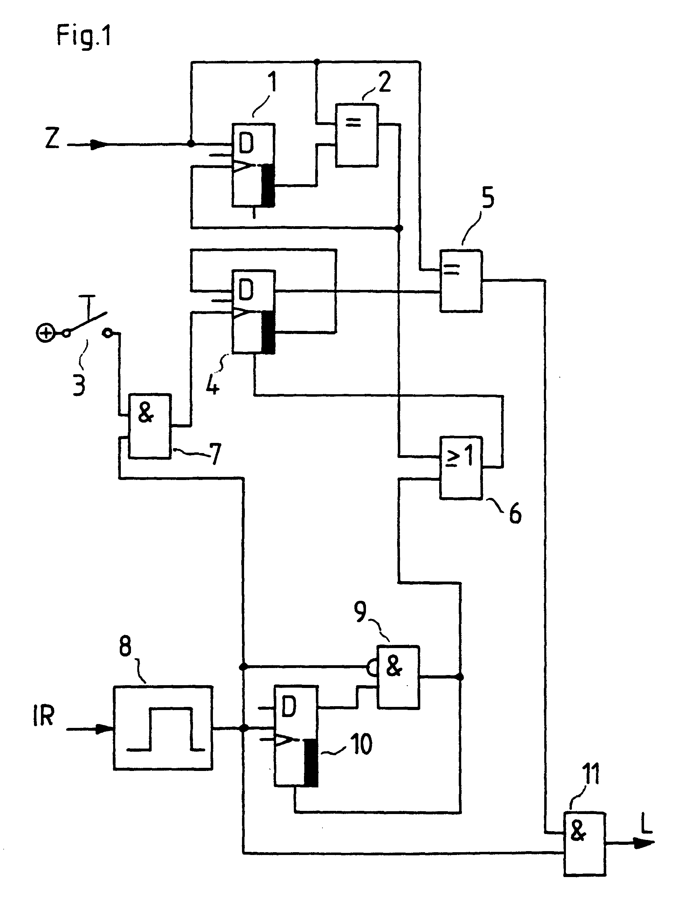

Ein solcher SLEEP-Modus der Schaltung ist bei einem PIR-Bewegungsmelder in CMOS -Ausführung sehr leicht zu realisieren. Weiter ist es für zukünftige Erweiterungen sinnvoll, zusätzliche Triggereingänge zum Triggern des Zeitgliedes vorzusehen. Weiter hebt es den Komfort, wenn die einzelnen Lampen im Fahrzeug separat ausgeschaltet werden können. Beschrieben wird die Erfindung auch anhand des Ausführungbeispiels in Fig. 1. Zum Verständnis nicht benötigte Anschlüsse, Versorgungsspannungen, Pull-Widerstände, Kondensatoren zur Laufzeitsynchronisation sind der Einfachkeit wegen hier nicht dargestellt. Das Statussignal der Zündung Z liegt sowohl am Dateneingang des D-Flip-Flops (1) an als auch an einem Eingang des NEXOR-Gatters (2). Der negative Ausgang des D-Flip-Flop (1) liegt am anderen Eingang des NEXOR-Gatters (2) an. Der Ausgang des NEXOR-Gliedes ist sowohl mit dem Takteingang des D-Flip-Flop (2) verbunden als auch mit einem Eingang des ODER-Gatters (6). Jede Zustandsänderung des Statussignals der Zündung Z führt dazu, das Parität am Eingang des NEXOR-Gatters herscht und deshalb der Ausgang des NEXOR-Gatters (2) auf HIGH geht und das D-Flip-Flop (1) gegetaktet wird. Durch die Übernahme des aktuellen Zustandes der Zündung wird der negierte Datenausgang des D-Flip-Flops (1) invertiert, die Parität der Eingangssignale am NEXOR-Gatter (2) liegt dann nicht mehr vor und der Ausgang des Gatters geht auf wieder auf LOW. Der Tasterschalter (3) ist an eine Spannung angeschlossen, die logisch HIGH entspricht. Er ist weiter mit einem Eingang des UND-Gatters (7) verbunden. Der andere Eingang des UND-Gatters (7) ist mit dem nicht negierten Datenausgang des Zeitgliedes (7) verbunden. Der Ausgang des UND-Gatters (7) ist mit dem Takteingang des D-Flip-Flops (4) verbunden und wird nur dann logisch HIGH, wenn das Zeitglied (7) noch nicht abgelaufen ist und der Taster (3) gedrückt ist. Beim D-Flip-Flop (4) ist der negierte Datenausgang auf den Dateneingang zurückgeführt, so daß bei jedem LOW-HIGH Übergang am Takteingang sich der Inhalt des D-Flip-Flops verändert. Der nicht negierte Datenausgang des D-Flip-Flops (4) ist mit einem Eingang des NEXOR-Gliedes (5) verbunden, dessen anderer Eingang mit dem Statussignal der Zündung Z verbunden ist. Am Ausgang des NEXOR-Gliedes (5) liegt also immer dann logisch HIGH an, wenn die Zündung aus ist und das D-Flip-Flop (4) nicht über den Tastschalter (3) gesetzt ist, oder wenn die Zündung an ist und das D-Flip-Flop (4) gesetzt ist. Der RESET-Eingang des D-Flip-Flops (4) ist mit dem Ausgang des ODER-Glieds (6) verbunden. Eine Zustandsänderung der Motorzündung, also jeder HIGH-LOW Übergang als auch LOW-HIGH-Übergang führt so zu einem Rücksetzen des D-Flip-Flops (4). Das zum Stand der Technik gehörende Zeitglied zum verzögerten Ausschalten der Innenbeleuchtung (7) wird gemäß der Erfindung nicht mehr durch die Türkontakte getriggert bzw. retriggert, sondern durch das Signal IR eines Infrarotbewegungsmelders. Der nicht negierte Datenausgang des Zeitgliedes (7) ist mit dem SET-Eingang des D-Flip-Flops (10) verbunden. Solange das Zeitglied läuft, ist somit das D-Flip-Flop (10) gesetzt. Der nicht negierte Datenausgang des D-Flip-Flops (10) ist mit dem nicht negierten Eingang des UND-Gliedes (9) verbunden. Der andere, negierte Dateneingang des UND-Gliedes (9) ist mit auch mit dem nicht negierten Datenausgang des Zeitgliedes (8) verbunden. Fällt das Zeitglied (8) nach vorgegebener Zeit ab, entsteht am Ausgang des UND-Gliedes (9) kurzfristig ein logisches HIGH, das sowohl das D-Flip-Flop (10) über dessen RESET-Eingang zurücksetzt, als auch über das ODER-Glied (6) das D-Flip-Flop (4) über seinen RESET-Eingang zurücksetzt. Das nicht negierte Signal des Zeitgliedes (8) liegt an einem Eingang des UND-Gatters (11), am anderen Eingang ist der Ausgang des NEXOR-Gatters (5) angeschlossen, am Ausgang des UND-Gliedes (11) wird das Signal L auf eine hier nicht dargestellte Verstärkerschaltung nach dem gängigen Stand der Technik geführt, mit der die Innenbeleuchtung letztendlich eingeschaltet wird. Ist das Zeitglied (8) vom Infrarotbewegungsmelder getriggert worden und ist die Zündung aus und das Halteglied (4) mittels Tastschalters nicht gesetzt, so ist die Beleuchtung eingeschaltet, ebenso wenn das Zeitglied (8) noch nicht abgelaufen ist, die Zündung an ist und das Halteglied (4) durch den Tasterschalter (3) gesetzt ist.

Als Variante soeben beschriebener Logikschaltung läßt sich am Dateneingang des D-Flip-Flops (1) anstelle des Signales von der Zündung das negierte Ausgangssignal des D-Flip-Flops (1) legen.

Als Vorteil der Erfindung ergibt sich, daß der Fahrzeugnutzer im Fahrzeug mit abgestelltem Motor mindestens solange Licht im Fahrzeug hat, bis das er das Fahrzeug verlassen hat. Will der Benutzer aus irgend einem Grund das Licht schon löschen, während er im Fahrzeug ist, muß er nur einmal auf den Taster (3) drücken. Das Licht bleibt solange aus, wie er sich im Fahrzeug aufhält. Auch beim Öffnen der Türen bleibt das Licht wunschgemäß aus. Kommt er z. Bsp. nach einiger Zeit, die länger ist als wie die Laufzeit des Zeitgliedes, wieder zum Auto, schaltet das Licht sofort ein, wenn IR-Bewegungsmelder ihn detektieren. Als weiterer Vorteil verlischt das Licht bei Abwesenheit des Fahrzeugsnutzers zwangsläufig bei Ablauf des Zeitgliedes. Damit wird mit Sicherheit ein Entleeren der Batterie verhindert. Außerdem ist die Verwendung von kostspieligen Türkontakten nicht mehr erforderlich.

## Patentansprüche

1. Schaltungsanordnung für die innenbeleuchtung für Fahrgast,- Koffer- bzw. Frachtraum und Handschuhfach eines Kraftfahrzeuges, **dadurch gekennzeichnet**, daß ein oder mehrere passive Infrarotbewegungsmelder bei geschlossenem Fahrzeug Bewegungen von einem oder mehreren Menschen im Fahrzeugzeuginnenraum erfassen und ein Zeitglied zum zeitverzögerten Ausschalten der Fahrzeuginnenbeleuchtung (8) triggem bzw. retriggern.

2. Schaltungsanordnung nach Anspruch 1, **dadurch gekennzeichnet**, daß die Innenbeleuchtung eingeschaltet ist, wenn sowohl das Zeitglied zum zeitverzögerten Ausschalten der Innenbeleuchtung (8) nicht abgelaufen ist, als auch das Signal mit positiver Logik von der Zündung und das Signal mit positiver Logik eines weiteren Haltegliedes (4) gleich sind, wobei das Halteglied (4), wenn das Zeitglied (8) nicht abgelaufen ist, bei jeder manuellen Betätigung eines vorgesehenen Tasterschalters (3) seinen Zustand wechselt, und das Halteglied (4) selber sowohl durch jede Zustandsänderung des von der Zündung kommenden Signales als auch bei Ablauf des Zeitgliedes (8) zurückgesetzt wird.

3. Schaltungsanordnung nach einem oder mehreren der Ansprüche 1 bis 2, **dadurch gekennzeichnet**, daß ein Teil oder alle Elemente des Infrarotbewegungsmelders, das bisherige Zeitglied (8) und die erfindungsmäßige Schaltung auf einem Schaltkreis integriert sind.

4. Schaltungsanordnung nach einem oder mehreren der Ansprüche 1 bis 3, **dadurch gekennzeichnet**, daß Tasterschalter (3), Infrarotbewegungsmelder, Leuchtkörper, das bisherige Zeitglied (8) und die erfindungsgemäße Schaltung in einem Modul im Dachbereich zusammengefaßt sind.

5. Schaltungsanordnung nach einem oder mehreren der Ansprüche 1 bis 4, **dadurch gekennzeichnet**, daß der Tasterschalter (3) ein Berührungsschalter ist.

6. Schaltungsanordnung nach einem oder mehreren der Ansprüchen 1 bis 5, **dadurch gekennzeichnet**, daß eine für Infrarotlicht undurchlässige Abdeckung vorgesehen ist, die zur Deaktivierung des Infrarotbewegungsmelders über den Infrarotbewegungsmelder geschoben werden kann.

7. Schaltungsanordnung nach einem oder mehreren der Ansprüche 1 bis 6, **dadurch gekennzeichnet**, daß das Zeitglied zum verzögerten Ausschalten der Innenbeleuchtung (8) zusätzlich getriggert wird beim Wechsel der Zentralverriegelung vom Zustand "geschlossen" auf den Zustand "geöffnet".

8. Schaltungsanordnung nach einem oder mehreren der Ansprüche 1 bis 7, **dadurch gekennzeichnet**, daß die erfindungsmäßige Schaltung softwaremäßig unter Zuhilfenahme eines Microcomputers und/ oder Logikbausteinen wie PALs, GALs etc. realisiert wird.

9. Schaltungsanordnung nach einem oder mehreren der Ansprüche 1 bis 8, **dadurch gekennzeichnet**, daß bei abgelaufenem Zeitglied zum zeitverzögerten Ausschalten der Fahrzeuginnenbeleuchtung (8) das Zeitglied (8) auch durch ein Triggersignal des Handtasters (3) getriggert wird, wobei das Halteglied (4), das für die Speicherung der Tastereingabe vorgesehen ist, weiterhin für die Eingabe durch den Taster (3) gesperrt bleibt, solange bis das anstehende Triggersignal des Handtasters (3) wieder abgefallen ist und das nun getriggerte Zeitglied (8) das Halteglied (4) für eine erneute Tastereingabe freigibt.

10. Schaltungsanordnung nach einem oder mehreren der Ansprüche 1 bis 9, **dadurch gekennzeichnet**, daß Leuchten im unteren Bereich der Türflügel vorgesehen sind, die den Bereich der Türschwellen ausleuchten können.

11. Schaltungsanordnung nach einem oder mehreren der Ansprüche 1 bis 10, **dadurch gekennzeichnet**, daß das Ein- und Ausschalten der Fahrzeuginnenbeleuchtung gedimmt ist.

12. Schaltungsanordnung nach einem oder mehreren der Ansprüche 1 bis 11, **dadurch gekennzeichnet**, daß ein Helligkeitssensor vorgesehen ist und die Beleuchtung erst nach Unterschreiten eines definierten Helligkeitswertes eingeschaltet werden kann.

13. Schaltungsanordnung nach einem oder mehreren der Ansprüche 1 bis 12, **dadurch gekennzeichnet**, daß zur Realisierung der Erfindung baugleiche Baugruppen verwendet werden, die in Master-Slave Schaltung verbunden werden können.

14. Schaltungsanordnung nach einem oder mehreren der Ansprüche 1 bis 13, **dadurch gekennzeichnet**, daß die Erfindung in Baugruppen und/ oder einem oder mehreren integrierten Schaltkreisen aufgebaut ist, bei denen einzelne Funktionsmerkmale durch externes Beschalten der Eingänge deaktiviert werden können.

15. Schaltungsanordnung nach einem oder mehreren der Ansprüche 1 bis 14, dadurch kennzeichnet, daß die Handschuhfachbeleuchtung parallel zur Fahrzeuginnenbeleuchtung geschaltet ist.

16. Schaltungsanordnung nach einem oder mehreren der Ansprüche 1 bis 15, **dadurch gekennzeichnet**, daß kein Handschuhfachkontakt vorgesehen ist.

17. Schaltungsanordnung nach einem oder mehreren der Ansprüche 1 bis 16, **dadurch gekennzeichnet**, daß IR-Strahlen aus dem Fahrzeuginneren durch Spiegel und/ oder Linsen, insbesondere Fresnellinsen, und/ oder Prismen und/ oder Lichtleitkabel und/ oder Polarisationsfilter und/ oder Beugungsspalten auf den IR-Sensor des passiven Infrarotbewegungsmelders aufgebracht werden.

18. Schaltungsanordnung nach einem oder mehreren der Ansprüche 1 bis 17, dadurch gekennzeichent, daß die Kofferraumbeleuchtung parallel zur übrigen Fahrzeuginnenbeleuchtung geschaltet ist.

19. Schaltungsanordnung nach einem oder mehreren der Ansprüche 1 bis 18, **dadurch gekennzeichnet**, daß kein Kontaktschalter für die Kofferraumbeleuchtung vorgesehen ist.

20. Schaltungsanordung nach einem oder mehreren der Ansprüche 1 bis 19, **dadurch gekennzeichnet**, daß ein Peltier-Element zum Kühlen des IR-Sensors vorgesehen ist.

21. Schaltungsanordnung nach Anspruch 20, **dadurch gekennzeichnet**, daß ein Temperaturregelsystem für den IR-Sensor vorgesehen ist, bei dem durch Wechsel der Stromrichtung das Peltier-Element wechselnd als Temperatursensor als auch als Kühlelement für den IR-Sensor eingesetzt wird.

22. Schaltungsanordnung nach einem oder mehreren der Ansprüche 1 bis 21, **dadurch gekennzeichnet**, daß Bauteile mit großem Energieverbrauch erst dann mit Strom versorgt werden, wenn ein Fahrzeugnutzer detektiert wird (Sleep-Modus).

23. Schaltungsanordnung nach einem oder mehreren der Ansprüche 1 bis 22, **dadurch gekennzeichnet**, daß die im Fahrzeuginneren vorhandenen Leuchten separat von Hand ein- und ausgeschaltet werden können.

24. Schaltungsanordnung für Cabriolet- und Hardtopkraftfahzeuge nach einem oder mehreren der Ansprüche 1 bis 23, **dadurch gekennzeichnet**, daß bei geöffnetem Dach der PIR-Bewegungsmelder auf mechanischem Wege oder durch einen elektrischen Schaltvorgang ganz deaktiviert wird, oder daß der IR-Sensor einen verkleinerten Erfassungssektor hat, mit dem Personen außerhalb des Fahrzeuges nicht erfaßt werden können.

## Claims

1. A circuit configuration for the vehicle, luggage or cargo area and glove compartment interior lighting of a motor vehicle, **characterised in that** when the vehicle is closed, one or more passive infrared motion sensors detect the movements of one or more people in the vehicle interior and trigger or re-trigger a timer (8) for time-delayed switching off of the vehicle's interior lighting.

2. A circuit configuration according to claim 1, **characterised in that** the interior lighting is switched on when both the timer (8) for time-delayed switching off of the interior lighting has not timed out and when the signal with positive logic from the ignition and the signal with positive logic of another holding element (4) are identical, wherein the holding element (4), if the timer (8) has not yet timed out, changes its state on each manual actuation of a provided push-button switch (3), and the holding element (4) itself is reset by both each alteration of state of the signal coming from the ignition and also by the timer (8) timing out.

3. A circuit configuration according to one or several of the claims 1 to 2, **characterised in that** part of, or all elements of the infrared motion sensor, the timer (8) which has hitherto been used and the circuit, according to the invention, are integrated in one circuit.

4. A circuit configuration according to one or several of the claims 1 to 3, **characterised in that** push-button switches (3), infrared motion sensors, lights, the timer (8) which has hitherto been used and the circuit, according to the invention, are combined together in a module in the roof area.

5. A circuit configuration according to one or several of the claims 1 to 4, **characterised in that** the push-button switch (3) is a contact switch.

6. A circuit configuration according to one or several of the claims 1 to 5, **characterised in that** a cover which is impermeable to infrared light is provided which can be pushed over the infrared motion sensor in order to deactivate the infrared motion sensor.

7. A circuit configuration according to one or several of the claims 1 to 6, **characterised in that** the timer (8) for delayed switching off of the interior lighting is additionally triggered when transferring the central locking from the status "closed" to the status "open".

8. A circuit configuration according to one or several of the claims 1 to 7, **characterised in that** the circuit, according to the invention, is realised via software with the help of a microcomputer and/or logic building blocks such as PALs, GALs, etc.

9. A circuit configuration according to one or several of the claims 1 to 8, **characterised in that** in the case of the timer (8) for time-delayed switching off of the vehicle interior lighting having timed out, the timer (8) is also triggered by a trigger signal of the manual switch (3), wherein the holding element (4) which is provided for storing the switch (3) inputs remains blocked for entry via the switch (3) until the present trigger signal of the holding element (4) has again timed out and the then-triggered timer (8) releases the holding element (4) for a renewed switch input.

10. A circuit configuration according to one or several of the claims 1 to 9, **characterised in that** lamps are provided in the lower part of the doors which can illuminate the area of the door sills.

11. A circuit configuration according to one or several of the claims 1 to 10, **characterised in that** the switching on and off of the vehicle interior lighting is dimmed.

12. A circuit configuration according to one or several of the claims 1 to 11, **characterised in that** a brightness sensor is provided and the lighting can only be switched on after brightness has dropped below a defined level.

13. A circuit configuration according to one or several of the claims 1 to 12, **characterised in that** identical components are used for realisation of the invention which can be connected in a master-slave arrangement.

14. A circuit configuration according to one or several of the claims 1 to 13, **characterised in that** the invention is built up in components and/or one or more integrated circuits where individual functional features can be deactivated by external switching of the inputs.

15. A circuit configuration according to one or several of the claims 1 to 14, **characterised in that** the glove compartment lighting is switched in parallel to the vehicle interior lighting.

16. A circuit configuration according to one or several of the claims 1 to 15, **characterised in that** no glove compartment contacts are provided.

17. A circuit configuration according to one or several of the claims 1 to 16, **characterised in that** IR rays from the interior of the vehicle are brought into incidence with the IR sensor of the passive infrared motion sensor by means of mirrors and/or lenses, especially Fresnel lenses, and/or prisms and/or optical fibre cables and/or polarisation filters and/or diffraction gaps.

18. A circuit configuration according to one or several of the claims 1 to 17, **characterised in that** the luggage area lighting is switched in parallel to the other vehicle interior lighting.

19. A circuit configuration according to one or several of the claims 1 to 18, **characterised in that** no contact switches are provided for the luggage area lighting.

20. A circuit configuration according to one or several of the claims 1 to 19, **characterised in that** a Peltier element is provided for cooling the IR sensor.

21. A circuit configuration according to claim 20, **characterised in that** a temperature control system is provided for the IR sensor wherein the Peltier element is alternately engaged as a temperature sensor and as a cooling element for the IR sensor by changing the direction of its current flow.

22. A circuit configuration according to one or several of the claims 1 to 21, **characterised in that** components with high energy consumption are only supplied with current when a vehicle user has been detected (sleep mode).

23. A circuit configuration according to one or several of the claims 1 to 22, **characterised in that** the lights present in the vehicle interior can be switched on and off separately by hand.

24. A circuit configuration for cabriolet (convertible) and hard-top vehicles according to one or several of the claims 1 to 23, **characterised in that** the PIR motion sensor is completely deactivated, either mechanically or by means of an electronic switching process, when the roof is open or that the IR sensor has a reduced detection sector via which persons outside the vehicle cannot be detected.

## Revendications

1. Circuit pour l'éclairage intérieur pour l'intérieur, le coffre ou bien l'espace de transport et la boîte à gants d'un véhicule automobile, caractérisée par le fait que, lorsque le véhicule est fermé, un ou plusieurs détecteurs de mouvement passifs à infrarouge détectent des mouvements d'un ou de plusieurs personnnes à l'intérieur du véhicule et déclenchent ou bien redéclenchent un relais temporisateur destiné à éteindre l'éclairage intérieur (8) du véhicule avec un retard de temps.

2. Circuit selon la revendication 1, caractérisé par le fait que l'éclairage intérieur est allumé lorsque aussi bien ledit relais temporisateur destiné à éteindre l'éclairage intérieur (8) avec un retard de temps ne s'est pas arrêté, que le signal à logique positive de l'allumage et le signal à logique positive d'un autre élément de maintien (4) sont identiques, l'élément de maintien (4) - lorsque le relais temporisateur (8) ne s'est pas arrêté - changeant de son état à chaque actionnement manuel d'un bouton-poussoir (3) prévu, et l'élément de maintien (4) même étant remis à l'état initial aussi bien par chaque changement d'état du signal venant de l'allumage que lorsque le relais temporisateur (8) s'est arrêté.

3. Circuit selon l'une ou plusieurs des revendications 1 à 2, caractérisé par le fait qu'une partie ou tous les éléments du détecteur de mouvement à infrarouge, le relais temporisateur (8) utilisé jusqu'à présent et le circuit selon l'invention sont intégrés sur un circuit de commutation.

4. Circuit selon l'une ou plusieurs des revendications 1 à 3, caractérisé par le fait que le bouton-poussoir (3), le détecteur de mouvement à infrarouge, des éléments lumineux, le relais temporisateur (8) utilisé jusqu'à présent et le circuit selon l'invention sont réunis dans un module dans la zone du toit.

5. Circuit selon l'une ou plusieurs des revendications 1 à 4, caractérisé par le fait que le bouton-poussoir (3) est un commutateur à contact.

6. Circuit selon l'une ou plusieurs des revendications 1 à 5, caractérisé par le fait qu'une couverture imperméable à la lumière infrarouge est prévue, qu'on peut faire glisser sur le détecteur de mouvement à infrarouge pour la désactivation de ce dernier.

7. Circuit selon l'une ou plusieurs des revendications 1 à 6, caractérisé par le fait que le relais temporisateur destiné à éteindre l'éclairage intérieur (8) avec un retard de temps est déclenché en sus lors du changement du verrouillage central des portes de l'état "fermé" à l'état "ouvert".

8. Circuit selon l'une ou plusieurs des revendications 1 à 7, caractérisé par le fait que le circuit selon l'invention est réalisé, quant au logiciel, à l'aide d'un micro-ordinateur et/ou d'éléments logiques tels que PAL, GAL etc.

9. Circuit selon l'une ou plusieurs des revendications 1 à 8, caractérisé par le fait que, lorsque le relais temporisateur destiné à éteindre l'éclairage intérieur (8) du véhicule avec un retard de temps s'est arrêté, ledit relais temporisateur (8) est déclenché aussi par un signal de déclenchement du bouton-poussoir (3), l'élément de maintien (4) qui est prévu pour la mémorisation de l'introduction par le bouton-poussoir, restant encore bloqué pour l'introduction par le bouton-poussoir (3) jusqu'à ce que le signal arrivant de déclenchement du bouton-poussoir (3) soit de nouveau descendu et que le relais temporisateur (8) déclenché maintenant libère l'élément de maintien (4) pour une nouvelle introduction par le bouton-poussoir.

10. Circuit selon l'une ou plusieurs des revendications 1 à 9, caractérisé par le fait que des lampes sont prévues dans la zone inférieure des battants, qui peuvent éclairer la zone des bas de marche.

11. Circuit selon l'une ou plusieurs des revendications 1 à 10, caractérisé par le fait que l'allumage et l'extinction de l'éclairage intérieur du véhicule est réglé(e) de façon continue.

12. Circuit selon l'une ou plusieurs des revendications 1 à 11, caractérisé par le fait qu'un détecteur de luminosité est prévu et que l'éclairage ne peut être allumé qu'après être inférieur à une valeur définie de luminosité.

13. Circuit selon l'une ou plusieurs des revendications 1 à 12, caractérisé par le fait que, pour la réalisation de l'invention, on utilise des ensembles en pièces détachées, de construction identique, qui peuvent être reliés dans un circuit maître-esclave.

14. Circuit selon l'une ou plusieurs des revendications 1 à 13, caractérisé par le fait que l'invention est réalisée dans des ensembles en pièces détachées et/ou dans un ou plusieurs circuits intégrés dans lesquels certaines caractéristiques fonctionnelles peuvent être désactivées en commandant les entrées de façon externe par signaux.

15. Circuit selon l'une ou plusieurs des revendications 1 à 14, caractérisé par le fait que l'éclairage de la boîte à gants est connecté en parallèle avec l'éclairage intérieur du véhicule.

16. Circuit selon l'une ou plusieurs des revendications 1 à 15, caractérisé par le fait qu'on ne prévoit pas de contact de boîte à gants.

17. Circuit selon l'une ou plusieurs des revendications 1 à 16, caractérisé par le fait que des rayons infrarouges de l'intérieur du véhicule sont dirigés par l'intermédiaire de miroirs et/ou de lentilles, en particulier de lentilles en échelon de Fresnel, et/ou de prismes et/ou de câbles fibre optique et/ou de polaroïds et/ou de fentes de diffraction sur le détecteur à infrarouge du détecteur passif de mouvement à infrarouge.

18. Circuit selon l'une ou plusieurs des revendications 1 à 17, caractérisé par le fait que l'éclairage du coffre est connecté en parallèle avec l'éclairage intérieur restant du véhicule.

19. Circuit selon l'une ou plusieurs des revendications 1 à 18, caractérisé par le fait qu'on ne prévoit pas d'interrupteur à contact pour l'éclairage du coffre.

20. Circuit selon l'une ou plusieurs des revendications 1 à 19, caractérisé par le fait qu'un élément Peltier est prévu pour le refroidissement du détecteur à infrarouge.

21. Circuit selon la revendication 20, caractérisé par le fait qu'un système de réglage de température est prévu pour le détecteur à infrarouge, dans lequel - par un changement du sens du courant - l'élément Peltier est utilisé alternativement comme détecteur de température et comme élément de refroidissement pour le détecteur à infrarouge.

22. Circuit selon l'une ou plusieurs des revendications 1 à 21, caractérisé par le fait que des composants ayant une grande consommation d'énergie ne sont alimentés en courant que lorsqu'un utilisateur du véhicule est détecté (mode "sleep") .

23. Circuit selon l'une ou plusieurs des revendications 1 à 22, caractérisé par le fait que les lampes existant à l'intérieur du véhicule peuvent être allumées et éteintes séparément à la main.

24. Circuit pour des automobiles décapotables et des automobiles hard-top, selon l'une ou plusieurs des revendications 1 à 23, caractérisé par le fait que, lorsque le toit est ouvert, le détecteur passif de mouvement à infrarouge est désactivé complètement de façon mécanique ou par une opération électrique de commutation, ou que le détecteur à infrarouge a un secteur réduit de détection avec lequel des personnes se trouvant à l'extérieur du véhicule ne peuvent pas être détectées.
